# EUROPEAN PATENT SPECIFICATION

(11) **EP 0 443 374 B1**
(45) Date of publication and mention of the grant of the patent: **26.06.1996**
(21) Application number: 91101704.4
(22) Date of filing: 07.02.1991
(51) Int. Cl.: C08F 10/00, C08F 4/611, C08F 2/34

(54) **A method for producing a Ziegler-Natta catalyzer, a method for producing a polyolefine by utilizing this catalyzer as well as products made by means of these methods**
Verfahren zur Herstellung eines Ziegler-Natta-Katalysators, Verfahren für Olefinpolymerisation unter Anwendung dieses Katalysators und mit diesem Verfahren hergestellte Produkte
Méthode de préparation d'un catalyseur Ziegler-Natta, procédé de préparation de polyoléfines en utilisant ce catalyseur et produits obtenus par ce procédé

(30) Priority: 20.02.1990 FI 900842
(43) Date of publication of application: 28.08.1991
(73) Proprietor: BOREALIS A/S, DK-2800 Lyngby (DK)
(72) Inventor: Palmqvist, Ulf, SF-06150 Porvoo (FI); Tervonen, Jari, SF-06100 Porvoo (FI); Leinonen, Timo, SF-06650 Hamari (FI); Husso, Yrjö, SF-04200 Kerava (FI)
(74) Representative: Bühling, Gerhard, Dipl.-Chem.

(56) References cited:
- EP-A- 0 120 734
- EP-A- 0 125 910
- EP-A- 0 179 666
- GB-A- 2 068 981

## Description

The invention relates to a method for producing a Ziegler-Natta catalyst, in which method prepolymerization is performed by bringing a transition metal compound activated by a donor and an Al-alkyl, which transition metal is included in the groups IV-VI of the periodic system, into contact with an α-olefine for obtaining a stable particle-shaped prepolymer.

The invention also relates to a method for producing polyolefines by means of a prepolymerized Ziegler-Natta catalyst, in which method the prepolymerization is performed by bringing the Ziegler-Natta catalyst activated by a donor and and Al-alkyl into contact with an α-olefine for obtaining a stable particle-shaped prepolymer, as well as a polyolefine made to means of the method.

Such catalyst systems for polymerizing and copolymerizing α-olefines and known as Ziegler-Natta catalysts are obtained by combining, on one hand, a catalyst that is a compound of such a transition metal which is included in the groups IV, V or VI of the periodic system, and on the other hand, a cocatalyst that is an organometallic compound of a metal in the groups I-III of said system. Among compounds used most widely are halogenated titanium derivatives as well as alkyl aluminium compounds or alkyl aluminium chlorides.

It is well known that the properties of these catalysts can be improved, if said transition metal compounds are used together with solid mineral compound. This solid compound is often used as a carrier for said transition metal compounds.

Mineral compounds used as a carrier include e.g. magnesium and titanium oxides, aluminium silicate and magnesium chloride.

It is well known that an α-olefine can be polymerized in a gas phase, e.g. in a fluidized bed reactor, in which a solid polymer to formed is maintained in fluidized state by means of an ascending gas flow containing the α-olefines to be polymerized. The gas mixture leaving the reactor generally cooled before recirculation by means of a quantity of α-olefines added to the reactor. The polymerization can be performed with a Ziegler-Natta type catalyst system, which is continuously or semicontinuosly supplied to the fluidized bed reactor. The removal of the polymer can also occur continuously or semicontinuosly. It is also well known that very active catalyst systems can be utilized comprising catalysts based on magnesium and transition metals. Because of the particle size and the very high activity, these catalysts are sometimes introduced into the fluidized bed polymerization reactor in the form of a prepolymer.

The pretreatment of the Ziegler-Natta type catalysts with propylene is well known in the art. The pretreatment is generally performed for stabilizing the catalyzer, since after the activation of the catalyst, the catalyst easily decomposes and is not durable for longer periods of time without stabilization.

In known methods for producing polyolefines, in the presence of transition metal halide catalysts, as a titanium halide, the essential parts of the polymer particles are copies of the catalyst particles.

For example in the US patent no. 4 431 569 is produced a non-decomposing active Ziegler-Natta type titanium chloride catalyst, which is obtained by reducing a titanium tetrachloride into a titanium trichloride in the presence of an organoaluminium compound at a low temperature, by bringing the titanium dichloride product into contact with an α-olefine for obtaining the titanium tetrachloride and by then treating the prepolymerized titanium dichloride with a chlorinated hydrocarbon. In this publication, the prepolymerization is performed at a temperature of ca. 0-100°C, preferably at a temperature of 30-40°C. The α-olefine, which can be e.g. a 4-methyl-1-pentene, is added in a suitable hydrocarbon solvent. The US patent no. 4 543 400 is a further example of the prior art, in which the prepolymerization with 4-methyl-1-pentene is performed at a low temperature in a hydrocarbon solvent. This is also the case in the EP patent application no. 11 914. Also in the EP patent application no. 263 718, the prepolymerization with an α-olefine occurs in a hydrocarbon solvent within a temperature range of -40-80°C, preferably -20-40°C. The JP patent no. 61 151 204 describes a method, in which an olefine is prepolymerized by means of 4-methyl-1-pentene and in which the same or different olefine is used in the main polymerization. The prepolymerization occurs in a liquid phase.

In connection with the prepolymers used currently, a problem has been formed by the average diameter, which is too small, and/or by the particle size distribution, which is too wide, in order to be able to use sufficiently high fluidization rates, if it is desirable to avoid the entry of the catalyst particles above the fluidized bed.

In the US patent no. 4 721 763, the main polymerization is performed in a gas phase for eliminating the problems mentioned above. In the US patent no. 4 721 763 is described a method, wherein in the first phase of the production of polyolefines one or more α-olefines is brought into contact with a Ziegler-Natta type catalyst system, which on one hand comprises a solid catalyst which is in a particle form and contains halogen magnesium transition metal atoms included in the groups IV, V and VI of the periodic system, and on the other hand a cocatalyst comprised of an organometallic compound of metals in the groups I-III of said system for obtaining a prepolymer in the form of solid particles, and in the second phase said prepolymer as brought into contact with one or more α-olefines in polymerization or copolymerization conditions in a gas phase by means of a fluidized bed, whereby a polymer or copolymer of α-olefines is obtained directly in a polymer form.

A prepolymer in accordance with the US patent no. 721 763 contains particles, whose average diameter is 80-300 µm (microns) and whose particle size distribution is such that the average diameter Dm of the mass in relation to the numeric average diameter Dn is ≤ 3. According to the US patent no. 4 721 763, the prepolymerization occurs in two stages: the first prepolymerization stage occurs in a suspension in a liquid medium, and the second prepolymerization stage can occur either in a suspension in a liquid medium or a gas phase.

The second prepolymerization stage of the US patent no. 4 721 763 occurs at a temperature of 60-80°C. In the fluidized prebed of the prepolymerization stage, only part of the α-olefines are polymerized in the contact of the copolymer with the polymer particles. Those α-olefines which are not polymerized leave the fluidized bed and pass the cooling system, the purpose of which is to remove the heat produced during the reactions before it is again recirculated into the fluidized bed.

Various methods known per se exist for obtaining a prepolymer, whose particle size distribution is specified. In this US patent, such previously known screening and particle fractionating methods using a gas flow or a liquid flow must be used, or a magnesium-based carrier is utilized. In the system of the US patent no. 4 721 463, the monomer of the catalyst system is the same as that used in the actual polymerization.

In the GB patent publication no. 2 189 252 is produced a Ziegler-Natta catalyst composition, which contains paraffinic hydrocarbon, which can be produced by prepolymerizing the same monomer as that used in the actual polymerization, which can occur in a hydrocarbon solvent or in a gas phase.

It is most preferable to perform the prepolymerization stage in a gas phase, which results in a uniform catalyst. The gas phase acts as a screen in such a way that the catalyst receives a smaller particle size distribution and becomes thus more stable. However, the problem related to the use of the gas phase is that the catalyst is easily destroyed. Thus, it has been possible to use it earlier only after the actual polymerization has been performed with the same monomer as the prepolymerization. It has been possible to use only a low temperature in the gas phase prepolymerization, otherwise the catalyst has been destroyed.

The object of this invention is to provide a method, in which the prepolymerization can be performed is a gas phase at a high temperature in such a way that a stable catalyst is obtained, which is not destroyed and which can be maintained for a longer time, owing to which the actual polymerization can be performed with a different polymer than the prepolymerization.

The objects are solved by a method for producing a Ziegler-Natta catalyst, in which method prepolymerization is performed by bringing a transition metal compound activated by a donor and an Al-alkyl, which transition metal is an element of the IV-VI groups of the periodic system, into contact with an α-olefine for obtaining a stable particle-shaped prepolymer in a catalyst bed, wherein
the prepolymerization is performed by bringing as said α-olefine a gaseous 4-methyl-1-pentene having a temperature of 70°C to 130°C into contact with said activated catalyst system, the flow rate of the gas is such that the catalyst bed is fluidized and the catalyst parts which have not been polymerized and have smaller particle sizes leave along with the gas flow, whereby a stable catalyst having a particle size distribution of 10 to 70 micrometers (10 to 70 microns), in particular 30 to 70 micrometers ( 30 to 70 microns), is obtained.

The catalyst obtained by the method according to the invention is on its part mainly characterized in that its particle size distribution is 10-70 µm (microns).

The present invention also provides a method for producing polyolefines by means of a prepolymerized Ziegler-Natta catalyst, in which method the prepolymerization is performed by bringing the Ziegler-Natta catalyst activated by a donor and an Al-alkyl in a catalyst bed into contact with an α-olefine for obtaining a stable particle-shaped prepolymer, wherein
a) the prepolymerization is performed by bringing as said α-olefine a 4-methyl-1-pentene having a temperature of 70° C to 130° C into contact with said activated catalyst system, the flow rate of the gas being such that the catalyst bed is fluidized and the catalyst parts which have riot been polymerized and have smaller particle sizes leave along with the gas flow, whereby a stable catalyst having a particle size distribution of 10 to 70 micrometers (10 to 70 microns) is obtained, after which
b) the actual polymerization is performed by means of the catalyst obtained in the section a) for obtaining a polyolefine.

The polyolefine produced by means of the method according to the invention is on its part mainly characterized in that it is a polypropylene.

The preferred embodiments of the invention have the features given in the subclaims.

The method according to the invention clearly deviates from other prepolymerization inventions described in the patent publications. The prepolymerization has earlier not been performed in a gas phase in such a way that a stable catalyst is obtained, which can be stored. The prepolymerization in the gas phase provides a possibility of very flexibly controlling the prepolymerization degree or the polymer/catalyst ratio in a prepolymerized catalyst. The inventive method can also be used when separating the finest fraction from the catalyst, i.e. for narrowing the particle size distribution as early as the prepolymerization stage. The inventive method produces a dry, loose, very flowable and mechanically durable prepolymerized catalyst, i.e. the product does not have to be dried. The polypropylene made according to the inventive method, which polypropylene is produced in a gas phase by prepolymerizing a catalyst, is strongly oriented. It has unusually advantageous orientation properties.

The methods according to the invention are next described in detail with reference to the accompanying drawing, which is not intended to limit the invention.

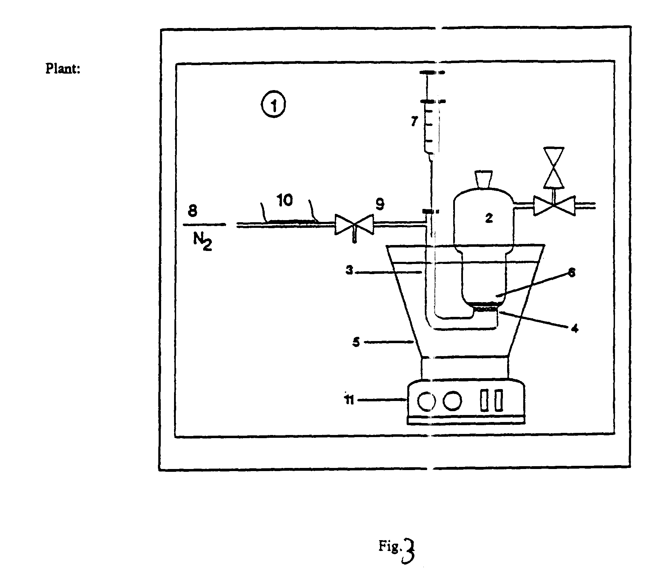

Fig. 3 of the drawing shows a plant, with which the prepolymerization is performed. Fig. 3 is a gas phase in the prepolymerization plant generally marked with a reference number 1. The reactor is marked with a reference number 2 and the vaporizing tube with a reference number 3. The plant also contains a sinter marked with a reference number 4 and an oil bath marked with a reference number 5. There is a catalyst 6 on the bottom of the reactor. 4-methyl-1-pentene is supplied by means of a syringe 7 via a heated nitrogen gas 8 trough a tube 9 to the catalyst bed. The tube 9 is heated by a heating element 10. The whole system is heated to a high temperature by a heating element 11.

Differential scanning calorimetry (DSC) can usually specify by means of a standard method one melting temperature for homopolypropylene grades. By means of this inventive prepolymerization method, it is possible to achieve such a prepolymerized catalyst that it produces polypropylene clearly having two different melting peaks. On the basis of X-ray spectra, the polymer comprises an oriented α-polypropylene. The orientation affects the properties of the polymer. DMTA diagrams show that as for the mechanical properties of the polymers, the stiffness decreases.

### Examples 1-5

The activation of a Ziegler-Natta type MgCl₂-based titanium catalyst, the internal donor of which was diisobutyl phtalate, was performed by feeding 2-3 g thereof (see Table 1) into the reactor 2 in a pentane slurry together with an aluminium alkyl and a donor. After about 5 minutes, after nitrogen bubbling, the solution was compressed away by means of nitrogen. The catalyst was dried by allowing warm nitrogen to flow therethrough from billow upwards.

The prepolymerization stage was performed by feeding 4-methyl-1-pentene with a syringe to the vaporizing tube 3, from which it passed together with the heated nitrogen 8 through the sinter 4 in the lower part 6 of the reactor 2 to the catalyst layer 6, where part of the steam was polymerized and part exited with the gas flow. The flow rate of the gas was adjusted so high that the catalyst layer was fluidized. Since part of the catalyst or its finest fraction tended to escape from the reactor, this method can also be used for narrowing the particle size distribution of the catalyst. A catalyst, which does not have fine-fractions, i.e. its. particle size distribution is narrow, is clearly more useful when it is polymerized in a gas phase reactor.

4-methyl-1-pentene was fed 50 ml on an average. This means that the monomer concentration in the reactor was very low so that by circulating only heated 4-methyl-1-pentene steam, a higher polymerization degree is reached. The prepolymerization degree can be flexibly controlled and the composition of the gas mixture used in the prepolymerization can be changed by varying the proportional quantities of the prepolymerization monomer (4-methyl-1-pentene) and the inert gas (N₂) and flow rate of the gas mixture. Similarly, the prepolymerization time affects the prepolymerization degree.

After the prepolymerization, the catalyst was dry and easy to handle as well as mechanically durable.

The prepolymerization temperature was 75-130°C and time 10-15 min. The quantity of the catalyst was 2-3 g. Diphenyl-dimetoxy-silane (DPDMS) was used as a donor, but suitable donors include also 1,8-cineole or phenyl-trietoxy-silane (FES).

The actual polymerization was performed in a 2 l reactor, in which 1.2 l of heptane was placed. Al/ti = 100 and Al/donor = 20 were used. The alkyl used was triisobutyl aluminium, but triethyl- or trioctyl aluminium (TEA or TOA) can also be used as an alkyl. Half of the aluminium-alkyl - donor heptane solution (50 ml) or 25 ml was transferred to the reactor with a syringe. Ca. 50 mg of prepolymerized catalyst was weighed into a septum bottle, from which is was flushed with the aluminium-alkyl - donor heptane solution (the other half or 25 ml) into a feeding vessel, by means of which it was fed to the polymerization reactor. The polymerization conditions were: propylene partial pressure 10 bar, nitrogen partial pressure 0.3 bar, temperature 70°C and polymerization time 3 h.

Table 1 lists the conditions of the prepolymerization examples 1-5. Table 2 shows the corresponding polymerization results (description as to how the polymerizations were performed), and Table 3 shows correspondingly the molar masses, results of differential scanning calorimetry and results of X-ray diffraction.

Table 1. Conditions of prepolymerization results 1-5. TIBA as alkyl and DPDMS as donor. Prepolymerization time 15 min.

| No. | Catalyst g | Al/Ti molar ratio | AL/D molar ratio | T °C | Increase in weight % |
|---|---|---|---|---|---|
| 1 | 3.0 | 1 | 1 | 70 | 100 |
| 2 | 2.0 | 5 | 1 | 75 | 50 |
| 3 | 2.1 | 5 | 5 | 90 | 30 |
| 4 | 2.2 | 5 | 5 | 110 | 15 |
| 5 | 2.1 | 5 | 5 | 130 | 10 |

Table 2. Polymerization results of examples 1-5 of slurry polymerizations of propylene.

| No. | Activity kg PP/g (orig. cat.) | Isotacticity % | Bulk density g/cm³ | Melt viscosity g/10 min |
|---|---|---|---|---|
| 1 | 1.8 | 94.3 | 0,41 | 45.2 |
| 2 | 1.5 | 92.4 | 0.43 | 56.4 |
| 3 | 4.0 | 95.1 | 0.47 | 6.9 |
| 4 | 1.0 | 91.0 | 0.44 | 5.7 |
| 5 | 0.7 | 92.4 | 0.46 | 7.5 |

Table 3. Molar masses of examples 1-3, DSC results and X-ray results. Two melting temperatures in DSC results.

| No. | M_{w} | M_{w}/Mₙ | Crystallization Tc(°C) | DSC Melting Tm(°C) | Crystallinity % | X-ray |
|---|---|---|---|---|---|---|
| 1 | 193 000 | 5.0 | 112.5 | 155/162 | 40.0 | α-PP, oriented |
| 2 | 202 000 | 4.8 | - | 157/163 | 43,9 | α-PP, oriented |
| 3 | 392 000 | 6.2 | 116.5 | 152/162 | 47.2 | α-PP, oriented |

The particle size distribution of the non-prepolymerized catalyst of the examples was 10-70 µm ( microns). In Example 1, the particle size distribution of the prepolymerized catalyst was 30-70 µm (microns).

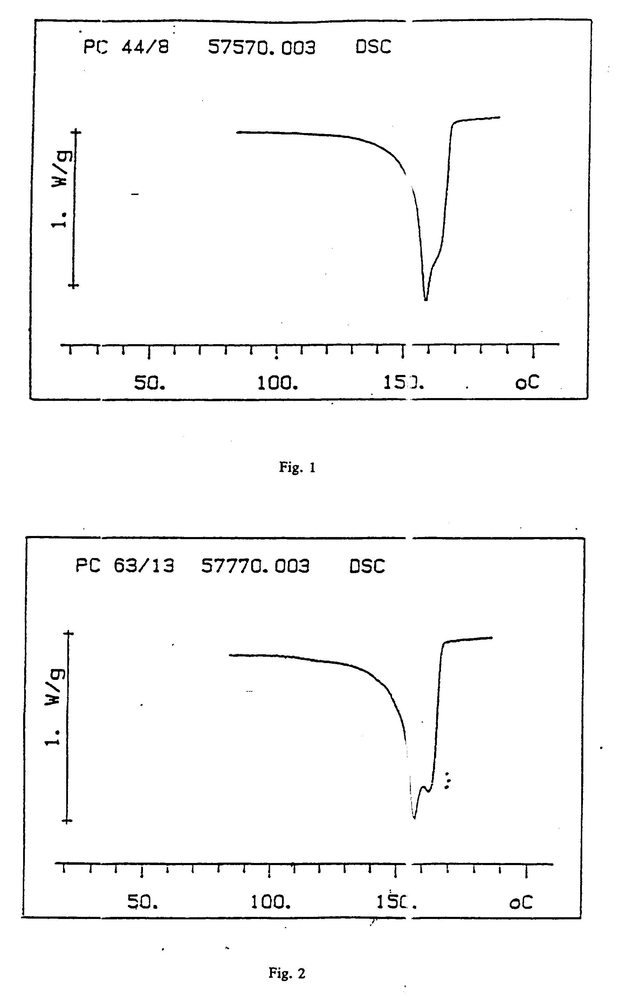

The figures of the DSC diagrams taken of polymers orresponding to Examples 1 and 2 clearly show two melting temperatures. Fig. 1 shows a sample no. 1 (PC55/8) and Fig 2. a sample no. PC63/13.

## Claims

1. A method for producing a Ziegler-Natta catalyst, in which method prepolymerization is performed by bringing a transition metal compound activated by a donor and an Al-alkyl, which transition metal is an element of the IV-VI groups of the periodic system, into contact with an α-olefine for obtaining a stable particle-shaped prepolymer in a catalyst bed,
**characterized in that**
the prepolymerization is performed by bringing as said α-olefine a gaseous 4-methyl-1-pentene having a temperature of 70° C to 130°C into contact with said activated catalyst system, the flow rate of the gas is such that the catalyst bed is fluidized and the catalyst parts which have not been polymerized and have smaller particle sizes leave along with the gas flow, whereby a stable catalyst having a particle size distribution of 10 to 70 micrometers ( 10 to 70 microns) is obtained.

2. A method according to claim 1,
**characterized in that**
the donor used in the activation of the catalyst is diphenyldimetoxy-silane (DPDMS), 1,8-cineole or phenyl-trietoxy-silane (FES).

3. A catalyst produced by means of a method according to claim 1 or 2,
**characterized in that**
the transition metal compound of the catalyst is titanium halide.

4. A method for producing polyolefines by means of a prepolymerized Ziegler-Natta catalyst, in which method the /29 prepolymerization is performed by bringing the Ziegler-Natta catalyst activated by a donor and an Al-alkyl in a catalyst bed into contact with an α-olefine for obtaining a stable particle-shaped prepolymer,
**characterized in that**
a) the prepolymerization is performed by bringing as said α-olefine a 4-methyl-1-pentene having temperature of 70° C to 130° C into contact with said activated catalyst system, the flow rate of the gas being such that the catalyst bed is fluidized and the catalyst parts which have not been polymerized and have smaller particle sizes leave along with the gas flow, whereby a stable catalyst having a particle size distribution of 10 to 70 micrometers (10 to 70 microns) is obtained, after which
b) the actual polymerization is performed by means of the catalyst obtained in the section a) for obtaining a polyolefine.

5. A method according to claim 4,
**characterized in that**
the donor used in the activation of the catalyst is diphenyldimetoxy-silane (DPDMS), 1,8-cienole or phenyl-trietoxy-silane (FES).

6. A method according to claim 4 or 5,
**characterized in that**
the monomer used in the stage b) is some other monomer than 4-methyl-1-pentene.

7. A polyolefine produced by means of a method of any of the claims 4 to 6,
**characterized in that**
it is an oriented polypropylene.

## Patentansprüche

1. Verfahren zur Herstellung eines Ziegler-Natta-Katalysators, wobei in dem Verfahren dadurch eine Vorpolymerisierung erfolgt, daß eine durch einen Donor und ein Al-Alkyl aktivierte Übergangsmetallverbindung, wobei das Übergangsmetall ein Element der Gruppen IV-VI des Periodensystems der Elemente ist, in Kontakt mit einem α-Olefin gebracht wird, um ein stabiles teilchenförmiges Vorpolymer in einem Katalysatorbett zu erhalten,
**dadurch gekennzeichnet, daß**
die Vorpolymerisierung dadurch erfolgt, daß als das α-Olefin gasförmiges 4-Methyl-1-penten mit einer temperatur von 70 °C bis 130 °C in Kontakt mit dem aktivierten Katalysatorsystem gebracht wird, wobei die Strömungsgeschwindigkeit des Gases so beschaffen ist, daß das Katalysatorbett fluidisiert wird und die Katalysatorteile, die nicht polymerisiert worden sind und eine kleinere Teilchengröße aufweisen, sich mit dem Gasstrom entfernen, wodurch ein stabiler Katalysator mit einer Teilchengrößenverteilung von 10 bis 70 Mikrometer (10 bis 70 Mikron) erhalten wird.

2. Verfahren nach Anspruch 1,
**dadurch gekennzeichnet, daß**
der bei der Aktivierung des Katalysators verwendete Donor Diphenyldimethoxysilan (DPDMS), 1,8-Cineol oder Phenyltriethoxysilan (FES) ist.

3. Katalysator, hergestellt mittels eines Verfahrens nach Anspruch 1 oder Anspruch 2,
**dadurch gekennzeichnet, daß**
die Übergangsmetallverbindung des Katalysators Titanhalogenid ist.

4. Verfahren zur Herstellung von Polyolefinen mittels eines vorpolymerisierten Ziegler-Natta-Katalysators, wobei in dem Verfahren die Vorpolymerisierung dadurch erfolgt, daß der durch einen Donor und ein Al-Alkyl in einem Katalysatorbett aktivierte Ziegler-Natta-Katalysator in Kontakt mit einem α-Olefin gebracht wird, um ein stabiles teilchenförmiges Vorpolymer zu erhalten,
**dadurch gekennzeichnet, daß**
a) die Vorpolymerisierung dadurch erfolgt, daß als das α-Olefin 4-Methyl-1-penten mit einer Temperatur von 70 °C bis 130 °C in Kontakt mit dem aktivierten Katalysatorsystem gebracht wird, wobei die Strömungsgeschwindigkeit des Gases so beschaffen ist, daß das Katalysatorbett fluidisiert wird und die Katalysatorteile, die nicht polylierisiert worden sind und eine kleinere Teilchengröße aufweisen, sich mit dem Gasstrom entfernen, wodurch ein stabiler Katalysator mit einer Teilchengrößenverteilung von 10 bis 70 Mikrometer (10 bis 70 Mikron) erhalten wird, wonach
b) die tatsächliche Polymerisation mittels des in Abschnitt a) erhaltenen Katalysators erfolgt, um ein Polyolefin zu erhalten.

5. Verfahren nach Anspruch 4,
**dadurch gekennzeichnet, daß**
der bei der Aktivierung des Katalysators verwendete Donor Diphenyldimethoxysilan (DPDMS), 1,8-Cineol oder Phenyltriethoxysilan (FES) ist.

6. Verfahren nach Anspruch 4 oder Anspruch 5,
**dadurch gekennzeichnet, daß**
das in der Stufe b) verwendete Monomer ein anderes Monomer als 4-Methyl-1-penten ist.

7. Polyolefin, hergestellt mittels eines Verfahrens nach einem der Ansprüche 4 bis 6,
**dadurch gekennzeichnet, daß**
es ein orientiertes Polypropylen ist.

## Revendications

1. Procédé pour préparer un catalyseur de Ziegler-Natta, dans lequel procédé on effectue une prépolymérisation par mise d'un composé de métal de transition activé par un donneur et un Al-alkyle, lequel métal de transition est un élément des croupes IV à VI de la classification périodique, en contact avec une α-oléfine pour obtenir un prépolymère stable en forme de particules dans un lit de catalyseur,
caractérisé en ce que
la prépolymérisation est effectuée par mise, en tant que dite α-oléfine, de 4-méthyl-1-pentène gazeux ayant une température de 70°C à 130°C en contact avec ledit système catalytique activé, le débit du gaz est tel que le lit de catalyseur est fluidisé et les parties de catalyseur qui n'ont pas été polymérisées et ont de faibles tailles des particules, sortent avec le courant gazeux, si bien que l'on obtient un catalyseur stable ayant une répartition granulométrique de 10 à 70 micromètres (10 à 70 microns).

2. Procédé selon la revendication 1,
caractérisé en ce que
le donneur utilisé dans l'activation du catalyseur est le diphényldiméthoxysilane (DPDMS), le 1,8-cinéole ou le phényltriéthoxysilane (FES).

3. Catalyseur produit selon le procédé de la revendication 1 ou 2,
caractérisé en ce que
le composé de métal de transition du catalyseur est un halogénure de titane.

4. Procédé pour préparer des polyoléfines à l'aide d'un catalyseur de Ziegler-Natta prépolymérisé, dans lequel procédé on effectue la prépolymérisation par mise du catalyseur de Ziegler-Natta activé par un donneur et un Al-alkyle dans un lit de catalyseur, en contact avec une α-oléfine pour obtenir un prépolymère stable sous forme de particules,
caractérisé en ce que
a) la prépolymérisation est effectuée par mise, en tant que dite α-oléfine, de 4-méthyl-1-pentène ayant une température de 70°C à 130°C, en contact avec ledit système catalytique activé, le débit du gaz est tel que le lit de catalyseur est fluidisé et les parties de catalyseur qui n'ont pas été polymérisées et ont de faibles tailles des particules, sortent avec le courant gazeux, si bien que l'on obtient un catalyseur stable ayant une répartition granulométrique de 10 à 70 micromètres (10 à 70 microns), après quoi
b) la polymérisation proprement dite est effectuée à l'aide du catalyseur obtenu dans la section a) pour obtenir une polyoléfine.

5. Procédé selon la revendication 4,
caractérisé en ce que
le donneur utilisé dans l'activation du catalyseur est le diphényldiméthoxysilane (DPDMS), le 1,8-cinéole ou le phényltriéthoxysilane (FES).

6. Procédé selon la revendication 4 ou 5,
caractérisé en ce que
le monomère utilisé dans l'étape b) est un autre monomère que le 4-méthyl-1-pentène.

7. Polyoléfine produite selon le procédé de l'une quelconque des revendications 4 à 6,
caractérisée en ce que
c'est un polypropylène orienté.
